# FASCICULE DE BREVET EUROPEEN

(11) **EP 3 476 734 B1**
(45) Date de publication et mention de la délivrance du brevet: **22.01.2020**
(21) Numéro de dépôt: 18197425.4
(22) Date de dépôt: 28.09.2018
(51) Int. Cl.: B64C 39/02, B64D 1/16

(54) **DRONE DE RECHERCHE ET DE MARQUAGE D'UNE CIBLE**
DROHNE ZUM SUCHEN UND MARKIEREN EINES ZIELS
DRONE FOR SEARCHING AND MARKING A TARGET

(30) Priorité: 25.10.2017 FR 1771123
(43) Date de publication de la demande: 01.05.2019
(73) Titulaire: Airbus Helicopters, 13725 Marignane Cedex (FR)
(72) Inventeur: GIBERT, Gauthier, 13580 La Fare Les Oliviers (FR); IMBERT, Nicolas, 13008 Marseille (FR)
(74) Mandataire: GPI & Associés

(56) Documents cités:
- EP-A1- 3 109 622
- EP-A2- 2 520 343
- DE-A1-102015 007 958
- DE-B3-102015 015 742
- US-A1- 2006 011 777
- US-A1- 2017 248 967

## Description

La présente invention est du domaine général de la recherche de cibles, et en particulier dans le domaine du sauvetage des personnes suite à un accident.

La présente invention concerne un drone de recherche et de marquage d'une cible, et notamment un drone de recherche des victimes d'avalanches ainsi qu'un drone de recherche d'objets métalliques.

Le terme « drone » désigne généralement un aéronef de formes diverses sans pilote à son bord. Un drone comporte par exemple une voilure fixe et peut utiliser différents types de propulsion tels qu'un ou plusieurs réacteurs ou bien une ou plusieurs hélices. Un drone peut également comporter une ou plusieurs voilures tournantes, appelées aussi « rotors », participant à la sustentation et/ou à la propulsion du drone. Un drone comportant un ou plusieurs rotors permet en particulier d'effectuer des vols stationnaires ou à faibles vitesses d'avancement ainsi que des vols de croisière.

Chaque rotor peut être entraîné en rotation par un moteur de façon indépendante et piloté par un système de commande centralisé. Un drone classiquement utilisé aujourd'hui peut comporter trois, quatre, six, huit ou douze rotors par exemple. Chaque rotor est de préférence entraîné par un moteur électrique, mais peut toutefois être entraîné par un moteur thermique.

En outre, un drone peut soit être commandé à distance par un opérateur faisant fonction de pilote, le drone comportant dans ce cas au moins une caméra et au moins un dispositif de communication, soit voler de façon autonome, le drone comportant alors des dispositifs de positionnement, de navigation et de pilotage automatiques. Pour être autonome, un drone comporte notamment des dispositifs de positionnement dans son environnement afin d'évoluer en prenant en compte le relief et les obstacles qui l'entourent.

Un dispositif de positionnement du drone dans son environnement est par exemple un dispositif de localisation par faisceau laser connu sous l'acronyme « LIDAR » pour la désignation en langue anglaise « Light Détection And Ranging » et/ou un dispositif de localisation par ultrasons. Un dispositif de localisation peut aussi être un radioaltimètre afin de définir une hauteur du drone vis-à-vis du sol.

Un drone peut comporter également comme dispositif de positionnement au moins un gyroscope afin de se positionner et de s'orienter dans l'espace et, par la suite, de pouvoir se stabiliser en pilotant de façon appropriée chaque rotor.

Enfin, un drone peut comporter un dispositif de localisation par satellite, tel un récepteur GPS pour la désignation en langue anglaise « Global Positioning System » permettant de positionner le drone dans un repère terrestre.

Par ailleurs, la taille d'un drone peut varier de quelques centimètres à plusieurs mètres, voire davantage et sa masse de quelques grammes à plusieurs tonnes selon les missions auxquelles le drone est destiné.

L'utilisation des drones, limitée initialement essentiellement au domaine militaire et à un usage de loisirs, s'étend actuellement au domaine professionnel civil, par exemple pour les prises de vues aériennes. Un développement technologique rapide et varié des drones, grâce notamment à la miniaturisation des dispositifs de positionnement précédemment évoqué ainsi que des dispositifs de communication, leur ouvre aujourd'hui des perspectives d'applications importantes.

Par exemple, le document WO 2016/100601 décrit un drone équipé d'un dispositif de prise de vues et des méthodologies de gestion d'un tel drone pour la réalisation de prises de vues de cibles sélectionnées par l'intermédiaire d'un dispositif d'affichage affichant les images fournies par le dispositif de prise de vues.

Le document WO 2015/173627 décrit une plateforme aérostatique en forme de ballon apte à s'élever à des hauteurs variables et principalement destinée à supporter des antennes afin de transmettre des données ainsi que des dispositifs de surveillance aérienne. Le ballon est ancré au sol grâce à un dispositif de câbles d'amarrage actionné afin de permettre au ballon d'être élevé et abaissé.

Cette démocratisation récente des drones a toutefois imposé la mise en place de réglementations nationales dans de nombreux pays afin de régir l'utilisation de drones, en particulier en fonction de leurs tailles et/ou de leurs masses.

Un drone peut être considéré comme un vecteur aérien équipé et, à ce titre, peut comporter d'une part un vecteur aérien de base, assurant le vol du drone, à savoir la propulsion et la sustentation du drone ainsi que son positionnement dans son environnement et sa navigation, et d'autre part un système de mission embarqué destiné à réaliser une ou plusieurs tâches, telles qu'orienter un appareil de prise de vues et effectuer des prises de vues.

L'expression « vecteur aérien » désigne par la suite le sous-ensemble du drone assurant le vol du drone.

En outre, dans le domaine général de la recherche de cibles, des appareils de recherche et de localisation ont été développés, ces appareils étant généralement spécifiques en fonction des cibles recherchées.

On connait par exemple les détecteurs de métaux utilisant des antennes généralement de forme plane, par exemple circulaire, et émettant un champ magnétique permettant de détecter des objets métalliques, y compris les objets métalliques enterrés. Un opérateur balaye une zone de recherche avec un tel détecteur de métaux en marchant sur cette zone et en couvrant lentement et méthodiquement la zone de recherche.

Des caméras embarquées dans des aéronefs permettent également la recherche de cibles. Ces caméras peuvent être équipées de différents filtres et/ou capteurs en utilisant par exemple le domaine infrarouge afin de détecter des sources de chaleurs et/ou des personnes, ou bien pour effectuer des recherches de nuit. Un dispositif d'analyse d'images est généralement couplé à une caméra pour permettre la détection de formes spécifiques correspondant aux cibles recherchées. Cependant, le déploiement d'un aéronef avec son équipage nécessite un certain temps de préparation et un coût d'utilisation important. De plus, il nécessite des moyens humains pour le pilotage de l'aéronef et pour l'analyse en temps réel des images captées par les caméras.

Dans le domaine particulier du sauvetage des personnes ensevelies sous une avalanche, des appareils de recherche de victimes d'avalanches désignés par l'acronyme « DVA » pour la désignation « Détection de Victimes d'Avalanches » ont été développés. De tels appareils, anciennement connus sous l'acronyme « ARVA » pour la désignation « Appareil de Recherche de Victimes d'Avalanches » sont des émetteurs/récepteurs émettant un signal en mode émetteur susceptible d'être capté par un autre appareil DVA en mode récepteur. L'appareil DVA porté par la victime doit être en mode émetteur pour être détecté et localisé par les appareils DVA en mode récepteur portés par les sauveteurs.

Cependant, la miniaturisation de ces appareils DVA qui a permis de démocratiser leur utilisation par les skieurs a pour inconvénient de limiter leur portée de détection. Dès lors, le balayage exhaustif d'une zone de recherche suite à une avalanche peut être fastidieux et peut requérir un temps important de préparation avant de pouvoir être réalisé selon le nombre de personnes disponibles et équipées d'un appareil DVA. De plus, l'accès de la zone de recherche peut être difficile et peut nécessiter un temps important préjudiciable pour les victimes.

En effet, la durée de vie des victimes d'accidents et d'avalanches en particulier, est souvent très limitée. Il apparaît donc nécessaire de réduire au maximum le temps utilisé pour la recherche et la localisation d'une victime de manière à la secourir le plus rapidement possible et accroître ses chances de survie.

L'art antérieur comprend des solutions permettant de répondre partiellement à ces inconvénients.

Dans le domaine du sauvetage de victimes, on connait par exemple le document WO 2014/0353422 qui décrit un drone télécommandé comportant un rotor principal et un rotor arrière, une caméra, une antenne pour transmettre des données et un équipement de sauvetage. Cet équipement de sauvetage peut comprendre un treuil muni d'un câble permettant de transporter la personne à secourir. Cet équipement de sauvetage peut également inclure un matériel largable, par exemple un kit de premiers secours pour la personne à secourir.

De même, le document WO 2016/159481 décrit un drone comprenant plusieurs rotors de sustentation et de propulsion ainsi qu'un dispositif de largage d'équipements de sauvetage pour un naufragé en mer par exemple. Le drone comporte également une caméra afin de détecter la présence d'un tel naufragé ainsi qu'un dispositif de libération de l'équipement de sauvetage afin de larguer cet équipement de sauvetage à proximité du naufragé.

Le document DE 10 2015 015742 décrit un drone multirotor destiné à intervenir sur un accident automobile afin notamment de mettre en place un triangle de signalisation et/ou de pulvériser au sol de la mousse, de la peinture ou encore de la poudre dans la zone du lieu de l'accident.

Le document EP 2520343, décrit un drone permettant la recherche d'une cible par détection d'un signal émis par la cible. La détection de la cible est faite en fonction de l'intensité du signal reçu par le drone. La localisation d'une cible détectée peut être effectuée par la transmission de ses coordonnées déterminées par un dispositif de localisation embarqué. Le drone peut également comporter un moyen de marquage de la position de la cible détectée permettant par exemple de déposer une peinture, un fumigène ou une balise sonore. Cette application concerne en particulier la recherche de victimes suite à un accident et une avalanche en particulier.

En outre, on connaît dans le domaine militaire les documents EP 2899491 et US 2006/0011777. Le document EP 2899491 décrit une unité volante de petite taille configurée pour voler à basses altitudes et comportant un dispositif de marquage muni d'un émetteur spécifique permettant la désignation d'une cible. L'unité volante peut se poser avec l'émetteur sur la cible, telle qu'un char ou bien une mine par exemple, ou bien déposer uniquement l'émetteur sur la cible afin de permettre à un missile d'être guidé jusqu'à la cible. L'unité volante peut également embarquer une charge explosive et la déclencher à proximité d'une cible.

Le document US 2006/0011777 décrit un véhicule à voilure tournante, par exemple un drone, comportant notamment deux rotors coaxiaux et contrarotatifs, un corps tubulaire, un moyen de guidage autonome, et une charge utile largable au cours du vol. Cette charge utile peut être une munition explosive, un sonar ou un élément de marquage tel que de la peinture ou bien un émetteur.

On connaît enfin les documents US 2017/0248967, EP 3109622 et DE 10 2015 007958 décrivant des drones dédié à des tâches d'analyse et/ou de traitement. Le document DE 10 2015 007958 décrit un drone destiné à la pulvérisation d'un fluide tel qu'un herbicide, un fongicide ou encore un liquide coloré. Le liquide coloré permet de marquer une zone de travail.

Le document EP 3109622 décrit un drone destiné à détecter des défauts de surface. Ce drone comporte notamment un système d'inspection et une unité de marquage afin de marquer un défaut détecté avec de l'encre ou de la peinture. Le système d'inspection peut être une caméra, les défauts étant recherchés automatiquement sur les images capturées par la caméra.

Le document US 2017/0248967 décrit un drone destiné à positionner un instrument par rapport à une surface cible afin que l'instrument effectue des mesures sur la surface cible. Le drone comporte une structure, un moyen de guidage autonome, un instrument de mesure, un moyen de détection de la cible, telle une caméra, et de la peinture comme moyen de marquage de la cible.

Le but de la présente invention est donc de s'affranchir des limitations mentionnées ci-dessus et de proposer un drone de recherche et de marquage d'une cible permettant une mise en œuvre simple et rapide ainsi qu'une détection et un marquage rapides et efficaces de la position de la cible, y compris dans des zones difficiles d'accès.

Dans ce cadre, la présente invention a pour objet un drone de recherche et de marquage d'une cible comportant :
- un vecteur aérien muni d'au moins un rotor participant à la sustentation et/ou à la propulsion du drone,
- un système de mission, et
- un dispositif de fixation du système de mission au vecteur aérien.

Le vecteur aérien assure le vol du drone, à savoir la propulsion et la sustentation du drone ainsi que son positionnement dans son environnement et sa navigation. Le vecteur aérien peut voler de façon autonome ou bien être commandé à distance par un opérateur. A ce titre, le vecteur aérien comporte au moins un rotor de sustentation et de propulsion et un système de commande centralisé muni notamment de dispositifs de positionnement dans son environnement et de dispositifs de navigation et de pilotage ainsi que de dispositifs de communication. Le vecteur aérien comporte le cas échéant au moins une caméra de vol afin d'être commandé à distance par un opérateur. Le vecteur aérien comporte de préférence trois rotors. Le vecteur aérien comporte par exemple trois, quatre, six, huit ou douze rotors. En conséquence, le drone de recherche et de marquage d'une cible selon l'invention peut effectuer des vols stationnaires ou des vols d'avancement à faibles vitesses ainsi que des vols de croisière à vitesses plus importantes.

Chaque rotor est entraîné en rotation de façon indépendante et commandé par le système de commande centralisé afin d'assurer les déplacements et la stabilisation du drone. Chaque rotor est de préférence entraîné par un moteur électrique, mais peut aussi être entraîné par un moteur thermique.

Le vecteur aérien comporte également au moins une source d'énergie afin d'alimenter d'une part chaque moteur entraînant un rotor et d'autre part le système de commande centralisé. Dans ce but, le vecteur aérien comporte de préférence une ou plusieurs batteries électriques.

Le vecteur aérien peut avantageusement être un vecteur aérien standard, à savoir un vecteur aérien existant et commercialisé, ne nécessitant donc aucun coût de développement et/ou de fabrication spécifique.

Le drone de recherche et de marquage d'une cible selon l'invention est remarquable en ce que le système de mission comporte :
- une structure, qui est fixe par rapport au vecteur aérien,
- un calculateur,
- au moins un dispositif de détection pour détecter une cible et
- un dispositif de distribution pour distribuer au moins un élément de marquage, le dispositif de distribution étant muni d'au moins un compartiment destiné à contenir un élément de marquage, le dispositif de distribution étant configuré afin de libérer l'élément de marquage contenu dans un compartiment de sorte à marquer un emplacement d'une cible détectée.

Le système de mission est de préférence positionné sous le vecteur aérien, ce qui permet un bon centrage du centre de gravité massique du drone.

La structure du système de mission permet de supporter les autres éléments du système de mission. La structure peut également former un train d'atterrissage fixe du drone selon l'invention permettant avantageusement au drone d'être autonome pour se maintenir au sol de façon stable et sans dégrader ses composants et notamment les rotors du vecteur aérien. De la sorte, le drone selon l'invention peut décoller et atterrir de façon autonome directement par rapport au sol. De plus, cette structure assure également une protection des autres composants du système de mission.

En l'absence d'un train d'atterrissage, le drone selon l'invention nécessite un opérateur tenant le drone lors d'un décollage et attrapant le drone lors d'un atterrissage afin d'éviter toute dégradation du drone.

La structure du système de mission est formée par exemple en matériaux composites ou bien en matériaux plastiques de sorte à limiter avantageusement la masse de la structure tout en permettant une rigidité suffisante à cette structure et, par suite, au système de mission. La structure peut aussi être faite en matériaux métalliques, par exemple en aluminium.

Le calculateur du système de mission permet tout d'abord de fournir des ordres de commande au vecteur aérien et en particulier au système de commande centralisé du vecteur aérien afin d'une part que le drone atteigne rapidement une zone de recherche et d'autre part que le drone suive une ou plusieurs trajectoires de recherche sur cette zone de recherche. Dans ce but, le calculateur du système de mission est relié au système de commande centralisé du vecteur aérien par une liaison filaire ou bien par une liaison sans fil de façon connue.

Le calculateur permet également d'analyser les informations fournies par chaque dispositif de détection du système de mission afin de déterminer la présence ou non d'une cible. Dans ce but, le calculateur est relié à chaque dispositif de détection par une liaison filaire ou bien par une liaison sans fil.

Le calculateur peut permettre ensuite de fournir des ordres de commande au vecteur aérien afin que le drone se dirige à proximité d'un emplacement d'une cible détectée et de commander le dispositif de distribution d'éléments de marquage afin de libérer un élément de marquage. Le calculateur peut permettre enfin de fournir des ordres de commande au vecteur aérien afin que le drone revienne à une base de départ ou bien se dirige vers un point de retour à la fin de sa mission de recherche ou bien lorsque son niveau d'énergie embarquée est insuffisant pour continuer la mission.

En outre, le calculateur du système de mission peut être déporté sur le vecteur aérien et être par exemple intégré au système de commande centralisé du vecteur aérien. De la sorte, le calculateur est communalisé entre le système de mission et le vecteur aérien afin de limiter la masse du drone.

Par ailleurs, le système de mission peut comporter une source d'énergie, telle une batterie électrique, le système de mission étant alors autonome au niveau énergétique.

Le système de mission peut ne pas comporter de source d'énergie et utiliser au moins une source d'énergie du vecteur aérien afin d'alimenter électriquement le calculateur, chaque dispositif de détection et le dispositif de distribution d'éléments de marquage du système de mission. Cette utilisation commune de sources d'énergie par le vecteur aérien et le système de mission peut permettre avantageusement d'optimiser la masse du drone de recherche et de marquage d'une cible selon l'invention.

Le drone de recherche et de marquage d'une cible selon l'invention a de préférence des dimensions et une masse réduites afin de permettre un transport facile au plus près d'une zone de recherche de cibles. De plus, ces dimensions et cette masse réduites peuvent également permettre de limiter les restrictions réglementaires auxquelles le drone de recherche et de marquage d'une cible selon l'invention peut être soumis.

La masse du drone selon l'invention est par exemple inférieure ou égale à trois kilogrammes (3kg), le système de mission ayant une masse de l'ordre de 1kg. Ses dimensions sont par exemple une hauteur de l'ordre de 0.3 mètre (0.3m) ainsi qu'une largeur et une longueur de l'ordre de 1m.

Par ailleurs, le dispositif de fixation du système de mission au vecteur aérien permet de préférence un montage et un démontage rapides entre le vecteur aérien et le système de mission, limitant de la sorte l'encombrement du drone selon l'invention lorsqu'il est démonté et facilitant ainsi son transport. De même, le vecteur aérien est aussi démontable de préférence.

Un dispositif de fixation peut par exemple comporter au moins une vis et un écrou, ou bien uniquement une ou plusieurs vis afin de maintenir le système de mission avec le vecteur aérien. La masse du système de mission étant faible, un dispositif de fixation peut également être formé par des bandes auto-agrippantes connues par exemple sous le nom commercial « Velcr® », un bande auto-agrippante mâle étant par exemple solidaire du vecteur aérien et une bande auto-agrippante femelle étant solidaire du système de mission.

Tout autre moyen de fixation permettant une liaison fiable et facilement démontable peut être utilisé comme dispositif de fixation entre le vecteur aérien et le système de mission.

De préférence, chaque dispositif de fixation permet une fixation rapide du système de mission au vecteur aérien afin d'assembler rapidement le drone de recherche et de marquage d'une cible selon l'invention pour qu'il soit opérationnel rapidement. De fait, le système de mission est ainsi interchangeable rapidement pour adapter le drone selon l'invention à la recherche de différents types de cibles.

Le drone pouvant être de préférence démonté rapidement et facilement, et de fait transporté facilement, il peut être acheminé au plus près d'une zone de recherche. Puis dès que les conditions de progression s'avèrent difficiles, le drone peut être assemblé rapidement, puis peut décoller afin d'atteindre rapidement en vol de croisière direct la zone de recherche. Le drone peut être piloté à distance pour atteindre cette zone de recherche ou bien atteindre de façon autonome cette zone de recherche dont les coordonnées ont été fournies au drone.

De la sorte, le drone selon l'invention permet avantageusement d'obtenir un gain de temps important pour commencer le balayage de la zone de recherche, indépendamment de la difficulté du terrain jusqu'à la zone de recherche.

Une fois la zone de recherche atteinte, le drone balaye la zone de recherche selon des trajectoires de recherche généralement prédéfinies dépendant du type de cibles recherchées et du ou des dispositifs de détection utilisés. Là encore, le drone peut suivre ces trajectoires de recherche en étant piloté à distance ou bien de façon autonome, les limites de la zone de recherche ayant été préalablement fournies au drone.

La zone de recherche constitue alors un environnement ségrégué pour le drone, correspondant à une zone géographique « bornée artificiellement ». Un environnement ségrégé est par exemple un polygone virtuel défini par des coordonnées dans un repère terrestre, par exemple des coordonnées GPS, constituant l'environnement d'exploitation du drone.

Une fois une cible détectée, le drone se rapproche de l'emplacement de cette cible détectée afin de la marquer. En effet, afin que ce marquage soit suffisamment précis, il est réalisé à une faible hauteur de largage prédéterminée du drone par rapport au sol, cette hauteur de largage étant une faible hauteur, alors que les trajectoires de recherche peuvent être suivies à des hauteurs de recherche importantes. Un marquage de l'emplacement d'une cible détectée est typiquement réalisé à une hauteur de largage de l'ordre d'un à deux mètres, le drone étant positionné à la verticale de la cible.

L'élément de marquage a pour fonction de permettre à une équipe de secours d'identifier rapidement l'emplacement d'une cible. Cet élément de marquage peut être visuel, tel qu'un fanion, une poudre colorée ou de la peinture, ou bien sonore, telle qu'une balise émettant un son.

L'utilisation d'une poudre colorée comme élément de marquage permet avantageusement de couvrir une surface au sol sensiblement constante pour une hauteur de largage prédéterminée et constante. En effet, le système de mission étant de préférence positionné sous le vecteur aérien, le souffle des rotors agit sur la poudre colorée lors de son largage de manière répétitive et limite, voire supprime, les effets d'éparpillement que pourraient avoir un vent, notamment violent, sur cette poudre colorée.

De fait, la hauteur de largage du drone pour larguer l'élément de marquage est définie de sorte que la poudre colorée soit avantageusement répartie sur une surface suffisamment grande pour être facilement repérable par l'équipe de secours. La hauteur de largage peut être adaptée en fonction de la masse volumique de la poudre colorée et de la superficie de la zone de marquage désirée par l'équipe de secours.

Par exemple, lorsque la hauteur de largage est de l'ordre d'un à deux mètres, cette poudre colorée couvre au sol une surface équivalente à un disque de diamètre de l'ordre de deux à trois mètres.

En outre, les coordonnées dans un repère terrestre de l'emplacement d'une cible détectée peuvent être déterminées par un dispositif de localisation, tel un récepteur GPS, embarqué dans le drone puis transmises à l'équipe de secours par l'intermédiaire d'un dispositif de communication du drone.

De plus, le drone de recherche et de marquage d'une cible peut également évoluer en présence d'autres drones évoluant dans la même zone de recherche. En conséquence et afin d'éviter toute collision, le drone de recherche et de marquage d'une cible selon l'invention peut comporter un dispositif de détection d'obstacles permettant de détecter les drones et les autres aéronefs volant à proximité. Le drone de recherche et de marquage d'une cible peut également recevoir, par l'intermédiaire de son dispositif de communication et de façon automatique, les coordonnées, dans le repère terrestre, de ces drones et aéronefs volant à proximité.

Le dispositif de distribution d'éléments de marquage du système de mission comporte de préférence plusieurs compartiments susceptibles de contenir respectivement un élément de marquage. De la sorte, au cours d'un même vol au-dessus d'une zone de recherche, le drone peut marquer avantageusement les emplacements de plusieurs cibles détectées.

Dans ce but, le dispositif de distribution est commandé par le calculateur du système de mission, le calculateur étant relié à au dispositif de distribution par une liaison filaire ou bien par une liaison sans fil, et permet de libérer successivement un élément de marquage contenu dans un compartiment pour chaque cible détectée.

Selon l'invention, le dispositif de distribution comporte un moteur rotatif, de préférence électrique, un distributeur muni de plusieurs compartiments et un fond muni d'une ouverture. L'ouverture a une forme sensiblement équivalente à la forme de chaque compartiment ou bien des dimensions inférieures aux dimensions de chaque compartiment.

Le moteur rotatif est relié, par une liaison filaire ou bien par une liaison sans fil, au calculateur et est commandé par le calculateur. Le moteur rotatif permet une rotation relative du distributeur par rapport au fond de sorte que l'ouverture se trouve lors de cette rotation successivement sous chaque compartiment et permette de libérer l'élément de marquage contenu dans ce compartiment afin de marquer l'emplacement d'une cible détectée. Le moteur rotatif est par exemple un moteur pas à pas.

Par exemple, le distributeur est fixe par rapport à la structure du système de mission et le moteur rotatif permet la rotation du fond par rapport à la structure.

Inversement, le fond peut être fixe par rapport à la structure du système de mission et le moteur rotatif permet la rotation du distributeur par rapport à la structure.

En outre, chaque dispositif de détection utilisé par le drone peut être spécifique selon les types de cibles recherchées.

Par exemple, si les cibles recherchées sont des objets métalliques susceptibles de se trouver à la surface du sol ou bien enterrés, un dispositif de détection est un détecteur de métal. Dans ce cas, le drone balaye la zone de recherche de préférence à faible hauteur de recherche, typiquement à une hauteur inférieure ou égale à une dizaine de centimètres.

Un tel dispositif de détection, destiné à la recherche d'objets métalliques, comporte au moins une antenne, par exemple une antenne surfacique. Cette antenne peut être de forme circulaire. Cependant, une telle antenne d'un détecteur de métal a généralement une faible portée de détection. De fait, le drone doit suivre une trajectoire de recherche avec des passages proches les uns des autres afin de couvrir la totalité de la zone de recherche.

Avantageusement, afin d'augmenter sa portée de détection, le dispositif de détection peut comporter plusieurs antennes, par exemple alignées. Dans ce cas, la trajectoire de recherche est adaptée et les passages sont plus éloignés les uns des autres permettant ainsi de balayer la zone de recherche plus rapidement que pour un dispositif de détection comportant une seule antenne.

Un dispositif de détection du système de mission peut également être un récepteur configuré afin de détecter la présence dans la zone de recherche d'une cible émettant un signal compatible avec ce dispositif de détection. La cible recherchée comporte alors un émetteur spécifique émettant ce signal compatible avec le dispositif de détection.

Cet émetteur spécifique est par exemple un appareil de recherche de victimes d'avalanches DVA en mode émetteur afin de détecter la présence d'une personne victime d'une avalanche sur la zone de recherche. Cet émetteur spécifique peut également être un émetteur de type GSM pour la désignation en langue anglaise « Global System for Mobile Communications » permettant la détection d'une personne porteuse d'un téléphone portable de type GSM. En effet, suite à la démocratisation de l'utilisation du téléphone portable sous la norme GSM, une majorité de personnes possède un tel téléphone portable. En conséquence, la recherche d'un émetteur GSM peut permettre de retrouver une personne perdue et/ou victime d'un accident, en montagne ou bien lors d'un feu de forêt par exemple.

Un dispositif de détection peut être un appareil DVA utilisé classiquement par un skieur en mode récepteur. Cependant, la portée de détection d'un tel appareil DVA est limitée. Le drone doit balayer la zone de recherche en utilisant une trajectoire de recherche identique à la trajectoire de recherche utilisée par une équipe de secours et à une hauteur de quelques mètres. De telles trajectoires de recherche utilisées pour la recherche de victimes d'avalanches sont définies par des procédures et connues. Elles décrivent par exemple un escargot ou un serpentin.

Afin d'augmenter sa portée, le dispositif de détection comporte au moins une antenne, de préférence une antenne multidimensionnelle. Par exemple, cette antenne est tridimensionnelle. De plus, cette antenne est positionnée selon une ou plusieurs directions sur la structure du système de mission.

De la sorte, l'utilisation d'une antenne multidimensionnelle permet tout d'abord d'améliorer la réception d'un signal qui peut ainsi être capté selon plusieurs directions simultanément. De plus, cette antenne peut être de dimension(s) plus importante(s) qu'une antenne intégrée à un appareil DVA et, par suite, peut permettre une meilleure réception d'un signal et de fait d'augmenter la portée de détection du dispositif de détection.

Avantageusement, l'augmentation de la portée de détection du dispositif de détection permet d'adapter la trajectoire de recherche dont les passages sont plus éloignés les uns des autres, ainsi que la hauteur de recherche du drone par rapport au sol qui peut être de plusieurs dizaines de mètres. Dès lors, le balayage de la zone de recherche est plus rapide, permettant de détecter et de localiser plus rapidement les cibles et, le cas échéant, de secourir plus rapidement les victimes.

Enfin, cette antenne, positionnée sur la structure, évite l'utilisation d'un support spécifique à cette antenne et permet donc de limiter la masse du système de mission et, par suite, du drone de recherche et de marquage d'une cible selon l'invention.

Un dispositif de détection du système de mission peut aussi comporter au moins une caméra et le calculateur peut comporter un dispositif d'analyse d'images configuré afin d'identifier dans des images fournies par chaque caméra une ou plusieurs cibles. Ce dispositif de détection permet par exemple de détecter des objets de formes prédéfinies, tels que des bâtons de ski et/ou des gants dans le cadre d'une recherche de victimes d'avalanches. Ce dispositif de détection permet également d'utiliser des filtres et/ou des capteurs couvrant un spectre spécifique tel que le domaine infrarouge.

De plus, le calculateur peut également intégrer des moyens et des analyses du domaine de l'intelligence artificielle lui permettant d'apprendre de son expérience au fur et à mesure des analyses d'images et des missions de secours réalisées. De la sorte, le calculateur est apte à prendre des décisions suite à son analyse d'images afin d'être de plus en plus performant.

Un système de mission peut comporter plusieurs dispositifs de détection afin de combiner leurs domaines de recherche, tout en évitant d'augmenter de façon trop importante la masse du système de mission. Par exemple, une caméra peut être combinée avec une antenne permettant de détecter un émetteur DVA.

De la sorte, le drone de recherche et de marquage d'une cible selon l'invention permet avantageusement d'améliorer l'efficacité de la recherche d'une cible à toutes ces étapes. Tout d'abord, le drone selon l'invention permet un accès plus rapide à une zone de recherche, quelques soient ses conditions d'accès. Ensuite, le balayage de la zone de recherche est plus rapide, pouvant notamment être fait à une hauteur de recherche importante par rapport au sol et permettant ainsi de balayer à chaque passage une surface plus importante. De plus, le drone peut permettre un balayage plus rapide qu'une personne se déplaçant à pied. Le marquage de l'emplacement de chaque cible détectée est de fait plus rapide permettant à l'équipe de secours d'agir au plus vite lorsque la cible est une personne victime d'un accident. Enfin, le drone de recherche et de marquage d'une cible selon l'invention permet le marquage des emplacements de plusieurs cibles au cours d'un même vol permettant de la sorte d'accélérer la détection et la localisation de ces cibles.

L'invention et ses avantages apparaîtront avec plus de détails dans le cadre de la description qui suit avec des exemples de réalisation donnés à titre illustratif en référence aux figures annexées qui représentent :
- les figures 1 à 3, divers exemples de réalisation d'un drone de recherche et de marquage d'une cible,
- la figure 4, une vue éclatée d'un drone de recherche et de marquage d'une cible, et
- la figure 5, une vue éclatée d'un système de mission.

Les éléments présents dans plusieurs figures distinctes sont affectés d'une seule et même référence.

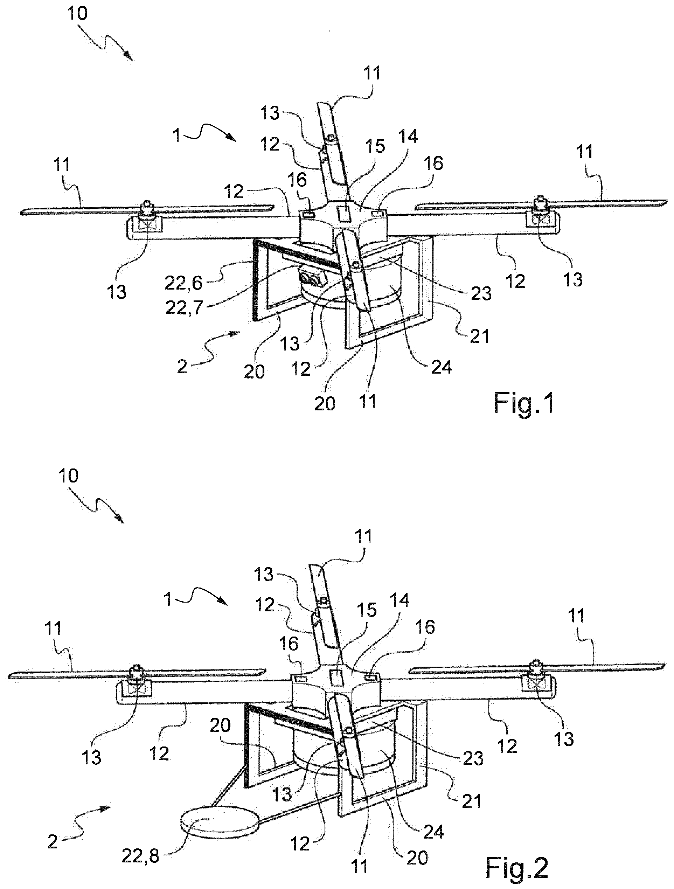

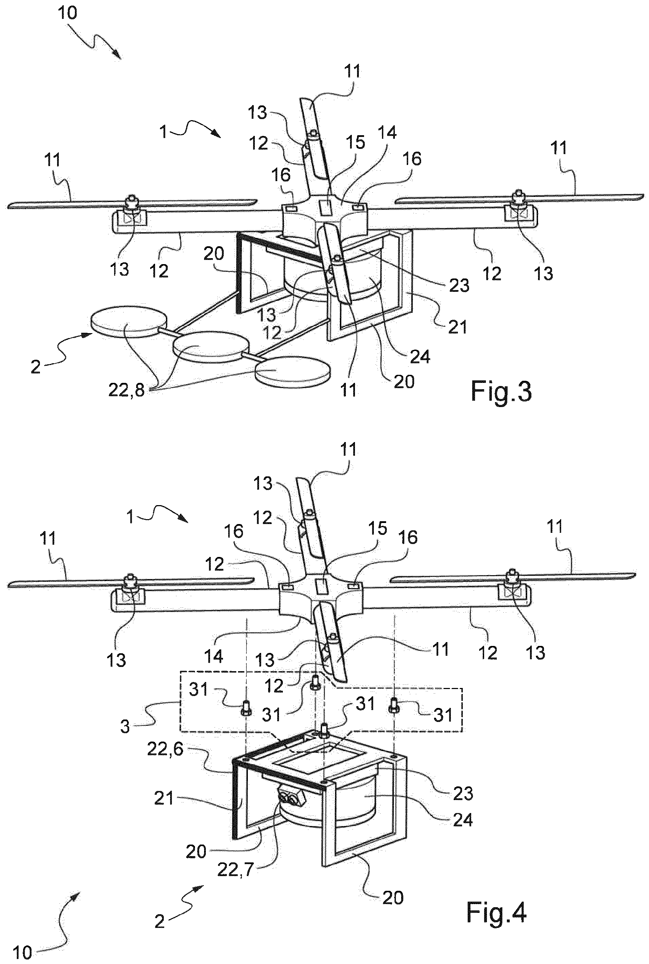

Sur les figures 1 à 3, trois exemples de réalisation d'un drone 10 de recherche et de marquage d'une cible sont représentés. Chaque drone 10 comporte un vecteur aérien 1, un système de mission 2 et un dispositif de fixation 3 du système de mission 2 au vecteur aérien 1. La figure 4 est une vue éclatée du premier exemple de drone 10 représenté sur la figure 1, le dispositif de fixation 3 comportant quatre vis 31 permettant de fixer le système de mission 2 au vecteur aérien 1.

Le vecteur aérien 1 et le dispositif de fixation 3 sont identiques pour les trois exemples de réalisation d'un drone 10 de recherche et de marquage d'une cible.

Le vecteur aérien 1 représenté sur les figures comporte quatre rotors 11, chaque rotor 11 étant entraîné en rotation respectivement par un moteur électrique 13 et participant à la sustentation et à la propulsion du drone 10. Chaque rotor 11 est implanté à l'extrémité d'un bras 12, chaque bras 12 étant relié à un corps central 14. Ce corps central 14 assure la liaison entre les quatre bras 12 ainsi que la rigidité nécessaire du vecteur aérien 1. Le corps central 14 comporte un système de commande centralisé 15 et deux batteries électriques 16.

Les bras 12 et le corps central 14 peuvent être facilement et rapidement séparés et assemblés afin de limiter l'encombrement du vecteur aérien 1 lors de son transport.

Le système de commande centralisé 15 permet de commander le pilotage du drone 10, que ce pilotage soit autonome ou bien commandé à distance, en agissant sur les moteurs électriques 13 entraînant chaque rotor 11 et provoquant ainsi les déplacements et/ou la réalisation d'un vol stationnaire du drone 10 ainsi que sa stabilisation en vol. Le système de commande centralisé 15 est relié à chaque moteur électrique 13 par une liaison filaire ou bien par une liaison sans fil et comporte notamment des dispositifs de positionnement du drone 10 dans son environnement et des dispositifs de navigation et de pilotage ainsi que des dispositifs de communication.

Les systèmes de mission 2 des trois exemples due drone 10 de recherche et de marquage d'une cible sont sensiblement identiques et comportent :
- une structure 21,
- un calculateur 23,
- au moins un dispositif de détection 22 pour détecter une cible et
- un dispositif de distribution 24 pour distribuer au moins un élément de marquage.

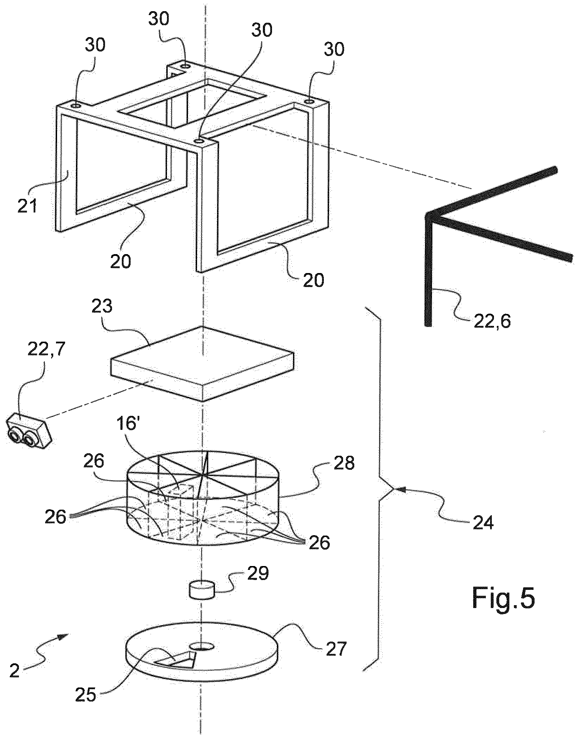

Une vue éclatée du système de mission 2 du premier exemple de drone 10 représenté sur la figure 1 est représentée sur à la figure 5.

Pour ces trois exemples de drones 10, la structure 21 est fixée au vecteur aérien 1 par le dispositif de fixation 3. Dans ce but, la structure 21 comporte quatre trous 30 pour permettre la fixation du système de mission 2 aux bras 12 du vecteur aérien 1 par l'intermédiaire des vis 31 du dispositif de fixation 3. De plus, la structure 21 forme un train d'atterrissage 20 fixe du drone 10 permettant avantageusement au drone 10 de se maintenir de façon stable au sol tout en protégeant les composants du système de mission 2.

Ces trois exemples de drones 10 diffèrent aux niveaux des dispositifs de détection 22. Le premier exemple de drone 10 représenté sur les figures 1, 4 et 5, comporte deux dispositifs de détection 22, c'est-à-dire d'une part une antenne tridimensionnelle 6 et d'autre part un ensemble de deux caméras 7. Le deuxième exemple de drone 10 représenté sur la figure 2 comporte un seul dispositif de détection 22 formé par une antenne plane et circulaire 8. Le troisième exemple de drone 10 représenté sur la figure 3 comporte un seul dispositif de détection 22 formé par trois antennes planes et circulaires 8 alignées.

L'antenne tridimensionnelle 6 du premier exemple de drone 10 permet de capter des signaux émis par un émetteur compatible, et en particulier par un appareil DVA en mode émetteur. Le premier exemple de drone 10 permet ainsi de détecter et de localiser des personnes porteuses d'un tel appareil DVA, en particulier suite à une avalanche. L'ensemble de deux caméras 7 permet de capter des images de l'environnement du drone 10, et notamment des images du sol. Cet ensemble de deux caméras 7 comporte par exemple deux focales différentes ou bien deux capteurs configurés pour deux domaines de longueurs d'ondes différents.

Par exemple, une première caméra fournit des images dans le domaine visible alors que la seconde caméra fournit des images dans le domaine infrarouge. Cet ensemble de deux caméras 7 est couplé à un dispositif d'analyse d'images intégré dans le calculateur 23 afin de détecter des objets de formes spécifiques. Dans le cas de la recherche de victimes d'une avalanche, le dispositif d'analyse d'images est configuré afin de détecter des bâtons de ski et/ou des gants.

Chaque antenne plane et circulaire 8 du deuxième exemple et du troisième exemple de drones 10 permet la détection d'objets métalliques situés par exemple à la surface du sol ou bien enterrés dans le sol.

Le deuxième exemple de drone 10 comportant une seule antenne plane et circulaire 8 a une portée de détection limitée sensiblement aux dimensions de cette antenne 8. Le troisième exemple de drone 10 comportant un trois antennes planes et circulaires 8 alignées a une portée de détection trois fois plus importante. Ce troisième exemple de drone 10 couvre donc une surface de recherche plus importante à chaque passage que le deuxième exemple de drone 10 et peut donc effectuer une recherche sur une zone de recherche donnée plus rapidement.

Le calculateur 23 permet d'analyser les informations reçues par chaque dispositif de détection 22 et de déterminer qu'une cible est détectée par un dispositif de détection 22. Le calculateur 23 communique également avec le système de commande centralisé 15 du vecteur aérien 1. Dans ce but, le calculateur 23 est relié d'une part à chaque dispositif de détection 22 et d'autre part au système de commande centralisé 15 du vecteur aérien 1 par une liaison filaire ou bien par une liaison sans fil.

Lors d'une mission de recherche, des informations telles que la localisation d'une zone de recherche et ses limites ainsi que le type de trajectoires de recherche à utiliser sont préalablement fournies au calculateur 23 par un membre de l'équipe de recherche par exemple. Ensuite, le calculateur 23 communique avec le système de commande centralisé 15 afin tout d'abord de se rendre de façon autonome sur la zone de recherche, puis de balayer cette zone de recherche selon la trajectoire de recherche définie, toujours de façon autonome, en respectant les limites de la zone de recherche.

La trajectoire de recherche est suivie par le drone 10 à une hauteur de recherche par rapport au sol qui peut varier suivant le ou les dispositifs de détection 22 utilisés et la cible recherchée.

Pour le premier exemple de drone 10, l'utilisation d'une antenne tridimensionnelle 6 permet une portée de détection plus importante qu'un appareil DVA utilisé traditionnellement par une équipe de secours. Dès lors, la hauteur de recherche est de quelques dizaines de mètres. De plus, cette hauteur de recherche permet avantageusement à l'ensemble de deux caméras 7 de capter des images du sol couvrant une surface importante.

Pour les deuxième et troisième exemples de drone 10, l'utilisation d'une antenne plane et circulaire 8 dédiée à la recherche d'objets métalliques impose une hauteur de recherche inférieure ou égale à une dizaine de centimètres.

Dans tous les cas, après détection d'une cible, le calculateur 23 communique avec le système de commande centralisé 15 de sorte que le drone 10 se positionne au-dessus de l'emplacement de la cible détectée afin de larguer un élément de marquage. La hauteur de largage du drone 10 peut varier également dans ce cas, en fonction de l'élément de marquage choisi.

En particulier, lorsque l'élément de marque est une poudre colorée, cette hauteur de largage est de préférence comprise entre un et deux mètres.

Avantageusement, le dispositif de distribution 24 comporte plusieurs compartiments 26 contenant respectivement un élément de marquage. De la sorte, le drone 10 de recherche et de marquage d'une cible peut détecter, localiser et marquer plusieurs cibles lors d'un seul vol de recherche.

Après la détection d'une cible et le positionnement du drone 10 au-dessus de l'emplacement de la cible, le calculateur 23 pilote le dispositif de distribution 24 afin de libérer un élément de marquage contenu dans un compartiment 26 de sorte à marquer un emplacement d'une cible détectée.

Un mode de réalisation particulier du dispositif de distribution 24 est représenté sur les figures et en particulier sur la figure 5. Le dispositif de distribution 24 comporte un distributeur 28 de forme cylindrique et muni de plusieurs compartiments 26 identiques, un moteur électrique rotatif 29 et un fond 27 circulaire muni d'une ouverture 25. L'ouverture 25 a une forme équivalente à la forme de chaque compartiment 26. Le distributeur 28 est fixe par rapport à la structure 21 et le moteur rotatif 29 permet la rotation du fond 27 par rapport au distributeur 28 et à la structure 21.

De la sorte, dès que l'emplacement d'une cible détecté doit être marqué par le drone 10, le calculateur 23 pilote le moteur électrique rotatif 29 de sorte que l'ouverture 25 se trouve sous un compartiment 26 contenant un élément de marquage afin de libérer cet élément de marquage.

Dans ce mode de réalisation particulier, un compartiment 26 ne peut pas contenir d'élément de marquage, une ouverture 25 se trouvant en permanence sous un compartiment 26. Dès lors, ce compartiment 26 inutilisable pour un élément de marquage peut par exemple contenir une batterie électrique 16' permettant ainsi d'augmenter avantageusement l'autonomie du drone 10.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles.

Notamment bien qu'uniquement un drone 10 comportant un vecteur aérien 1 muni de quatre bras 12 et de quatre rotors 11 ait été décrit, l'invention concerne également un drone 10 comportant un vecteur aérien 1 muni de trois, six, huit ou douze bras 12 et trois, six, huit ou douze rotors 11 par exemple.

De même, le dispositif de fixation 3 peut comporter tout moyen de fixation permettant une liaison fiable et facilement démontable entre le vecteur aérien 1 et le système de mission 2.

## Revendications

1. Drone (10) de recherche et de marquage d'une cible comportant :
- un vecteur aérien (1) muni d'au moins un rotor (11) participant à la sustentation et/ou à la propulsion dudit drone (10),
- un système de mission (2), et
- un dispositif de fixation (3) dudit système de mission (2) audit vecteur aérien (1)
ledit système de mission (2) comportant :
- une structure (21), fixe par rapport audit vecteur aérien (1),
- un calculateur (23),
- au moins un dispositif de détection (22) pour détecter une cible et
- un dispositif de distribution (24) pour distribuer au moins un élément de marquage, ledit dispositif de distribution (24) étant muni d'au moins un compartiment (26) destiné à contenir un élément de marquage, ledit dispositif de distribution (24) étant configuré afin de libérer ledit élément de marquage contenu dans un compartiment (26) de sorte à marquer un emplacement d'une cible détectée,
**caractérisé en ce que** ledit dispositif de distribution (24) comporte un moteur rotatif (29), un distributeur (28) muni de plusieurs compartiments (26) et un fond (27) muni d'une ouverture (25), ledit moteur rotatif (29) permettant une rotation relative dudit distributeur (28) par rapport audit fond (27) afin que ladite ouverture (25) se trouve sous un compartiment (26) de sorte à libérer ledit élément de marquage contenu dans ledit compartiment (26).

2. Drone (10) selon la revendication 1,
**caractérisé en ce que** ledit dispositif de détection (22) comporte au moins une antenne (6,8).

3. Drone (10) selon la revendication 2,
**caractérisé en ce qu'**au moins une antenne (6) est multidimensionnelle.

4. Drone (10) selon l'une quelconque des revendications 2 à 3,
**caractérisé en ce que** ladite au moins une antenne (6,8) est positionnée selon une ou plusieurs directions sur ladite structure (21).

5. Drone (10) selon la revendication 2,
**caractérisé en ce qu'**au moins une antenne (8) est surfacique.

6. Drone (10) selon la revendication 5,
**caractérisé en ce que** ledit dispositif de détection (22) comporte plusieurs antennes (8) surfaciques.

7. Drone (10) selon l'une quelconque des revendications 1 à 6,
**caractérisé en ce qu'**au moins un dispositif de détection (22) est un détecteur de métal.

8. Drone (10) selon l'une quelconque des revendications 1 à 7,
**caractérisé en ce qu'**au moins un dispositif de détection (22) est un récepteur configuré afin de détecter une cible émettant un signal compatible avec ledit dispositif de détection (22).

9. Drone (10) selon la revendication 8,
**caractérisé en ce que** ledit dispositif de détection (22) est un récepteur configuré afin de détecter une cible comportant un émetteur spécifique qui est un téléphone portable ou bien un détecteur de victimes d'avalanches DVA.

10. Drone (10) selon l'une quelconque des revendications 1 à 9,
**caractérisé en ce que** ledit dispositif de détection (22) comporte au moins une caméra (7) et ledit calculateur (23) comporte un dispositif d'analyse d'images configuré afin d'identifier dans des images fournies par chaque caméra (7) une ou plusieurs cibles.

11. Drone (10) selon l'une quelconque des revendications 1 à 10,
**caractérisé en ce que** ladite structure (21) forme un train d'atterrissage (20) fixe.

12. Drone (10) selon l'une quelconque des revendications 1 à 11,
**caractérisé en ce que** ledit distributeur (28) est fixe par rapport à ladite structure (21) et ledit moteur rotatif (29) permet une rotation dudit fond (27) par rapport audit distributeur (28) et à ladite structure (21) de sorte que ladite ouverture (25) se trouve lors de ladite rotation sous un compartiment (26) et permette de libérer un élément de marquage contenu dans ledit compartiment (26) afin de marquer l'emplacement d'une cible détectée.

13. Drone (10) selon l'une quelconque des revendications 1 à 12,
**caractérisé en ce qu'**un élément de marquage est une poudre colorée.

14. Drone (10) selon l'une quelconque des revendications 1 à 13,
**caractérisé en ce que** ledit drone (10) comporte un dispositif de localisation et un dispositif de communication de sorte à transmettre les coordonnées de chaque cible détectée fournies par ledit dispositif de localisation.

15. Drone (10) selon l'une quelconque des revendications 1 à 14,
**caractérisé en ce que** ledit drone (10) comporte des dispositifs de positionnement dans son environnement de sorte à évoluer de façon autonome dans un environnement ségrégué.

## Patentansprüche

1. Drohne (10) zum Suchen und Markieren eines Ziels, umfassend:
- einen Luftträger (1) mit mindestens einem Rotor (11), der am Heben und/oder Antreiben der Drohne (10) beteiligt ist,
- ein Missionssystem (2) und
- eine Befestigungsvorrichtung (3) zum Befestigen des Missionssystems (2) an dem Luftträger (1),
wobei das Missionssystem (2) umfasst:
- eine in Bezug auf den Luftvektor (1) feste Struktur (21),
- einen Rechner (23),
- mindestens eine Erfassungsvorrichtung (22) zum Erfassen eines Ziels und
- eine Ausgabevorrichtung (24) zum Ausgeben mindestens eines Markierungselements, wobei die Ausgabevorrichtung (24) mindestens ein Fach (26) zum Aufnehmen eines Markierungselements aufweist, wobei die Ausgabevorrichtung (24) konfiguriert ist, um das in einem Fach (26) enthaltene Markierungselement freizusetzen, um so eine Position eines erfassten Ziels zu markieren,
**dadurch gekennzeichnet, dass** die Ausgabevorrichtung (24) umfasst
einen Drehmotor (29), einen Verteiler (28) mit einer Mehrzahl von Fächern (26) und einen Boden (27) mit einer Öffnung (25), wobei der Drehmotor (29) eine Drehung des Verteilers (28) relativ zu dem Boden (27) ermöglicht, so dass die Öffnung (25) unter einem Fach (26) angeordnet ist, um das in dem Fach (26) enthaltene Markierungselement freizusetzen.

2. Drohne (10) nach Anspruch 1,
**dadurch gekennzeichnet, dass** die Erfassungsvorrichtung (22) mindestens eine Antenne (6, 8) aufweist.

3. Drohne (10) nach Anspruch 2,
**dadurch gekennzeichnet, dass** mindestens eine Antenne (6) mehrdimensional ist.

4. Drohne (10) nach einem der Ansprüche 2 bis 3,
**dadurch gekennzeichnet, dass** die mindestens eine Antenne (6, 8) in einer oder mehreren Richtungen auf der Struktur (21) positioniert ist.

5. Drohne (10) nach Anspruch 2,
**dadurch gekennzeichnet, dass** mindestens eine Antenne (8) eine Oberflächenantenne ist.

6. Drohne (10) nach Anspruch 5,
**dadurch gekennzeichnet, dass** die Erfassungsvorrichtung (22) eine Mehrzahl von Oberflächenantennen (8) umfasst.

7. Drohne (10) nach einem der Ansprüche 1 bis 6,
**dadurch gekennzeichnet, dass** mindestens eine Erfassungsvorrichtung (22) ein Metalldetektor ist.

8. Drohne (10) nach einem der Ansprüche 1 bis 7,
**dadurch gekennzeichnet, dass** mindestens eine Erfassungsvorrichtung (22) ein Empfänger ist, der konfiguriert ist, um ein Ziel zu erfassen, das ein mit der Erfassungsvorrichtung (22) kompatibles Signal aussendet.

9. Drohne (10) nach Anspruch 8,
**dadurch gekennzeichnet, dass** die Erfassungsvorrichtung (22) ein Empfänger ist, der konfiguriert ist, um ein Ziel zu erfassen, das einen bestimmten Sender aufweist, bei dem es sich um ein Mobiltelefon oder einen DVA-Lawinenopferdetektor handelt.

10. Drohne (10) nach einem der Ansprüche 1 bis 9,
**dadurch gekennzeichnet, dass** die Erfassungsvorrichtung (22) mindestens eine Kamera (7) umfasst und der Computer (23) eine Bildanalysevorrichtung umfasst, die konfiguriert ist, um in von jeder Kamera (7) bereitgestellten Bildern ein oder mehrere Ziele zu identifizieren.

11. Drohne (10) nach einem der Ansprüche 1 bis 10,
**dadurch gekennzeichnet, dass** die Struktur (21) ein festes Landegestell (20) bildet.

12. Drohne (10) nach einem der Ansprüche 1 bis 11,
**dadurch gekennzeichnet, dass** der Verteiler (28) in Bezug auf die Struktur (21) fest ist und der Drehmotor (29) eine Drehung des Bodens (27) in Bezug auf den Verteiler (28) und die Struktur (21) ermöglicht, so dass die Öffnung (25) sich bei der Drehung unter einem Fach (26) befindet und es ermöglicht, ein in dem Fach (26) enthaltenes Markierungselement freizusetzen, um die Position eines erfassten Ziels zu markieren.

13. Drohne (10) nach einem der Ansprüche 1 bis 12,
**dadurch gekennzeichnet, dass** ein Markierungselement ein farbiges Pulver ist.

14. Drohne (10) nach einem der Ansprüche 1 bis 13,
**dadurch gekennzeichnet, dass** die Drohne (10) eine Ortungsvorrichtung und eine Kommunikationsvorrichtung aufweist, um die von der Ortungsvorrichtung bereitgestellten Koordinaten jedes erfassten Ziels zu übertragen.

15. Drohne (10) nach einem der Ansprüche 1 bis 14,
**dadurch gekennzeichnet, dass** die Drohne (10) Vorrichtungen zum Positionieren in ihrer Umgebung aufweist, um sich in einer abgeschirmten Umgebung autonom zu bewegen.

## Claims

1. Drone (10) for searching and marking a target, comprising:
- an aerial vehicle (1) provided with at least one rotor (11) participating in the lift and/or propulsion of said drone (10),
- a mission system (2), and
- a device (3) for fixing said mission system (2) to said aerial vehicle (1)
said mission system (2) comprising:
- a structure (21), fixed with respect to said aerial vehicle (1),
- a calculator (23),
- at least one detection device (22) for detecting a target, and
- a distribution device (24) for distributing at least one marking element, said distribution device (24) being provided with at least one compartment (26) designed to contain a marking element, said distribution device (24) being configured so as to release said marking element contained in a compartment (26) so as to mark a location of a detected target,
**characterised in that** said distribution device (24) comprises a rotary engine (29), a distributor (28) provided with multiple compartments (26) and a base (27) provided with an opening (25), said rotary engine (29) allowing a relative rotation of said distributor (28) with respect to said base (27) so that said opening (25) is disposed below a compartment (26) so as to release said marking element contained in said compartment (26).

2. Drone (10) according to claim 1, **characterised in that** said detection device (22) comprises at least one antenna (6, 8).

3. Drone (10) according to claim 2, **characterised in that** said at least one antenna (6) is multidimensional.

4. Drone (10) according to either one of claims 2 or 3, **characterised in that** said at least one antenna (6, 8) is positioned along one or more directions on said structure (21).

5. Drone (10) according to claim 2, **characterised in that** said at least one antenna (8) is a surface antenna.

6. Drone (10) according to claim 5, **characterised in that** said detection device (22) comprises multiple surface antennae (8).

7. Drone (10) according to any one of claims 1 to 6, **characterised in that** the at least one detection device (22) is a metal detector.

8. Drone (10) according to any one of claims 1 to 7, **characterised in that** at least one detection device (22) is a receptor configured so as to detect a target emitting a signal compatible with said detection device (22).

9. Drone (10) according to claim 8, **characterised in that** said detection device (22) is a receptor configured so as to detect a target comprising a specific emitter that is a mobile phone or an avalanche victim detector (AVD).

10. Drone (10) according to any one of claims 1 to 9, **characterised in that** said detection device (22) comprises at least one camera (7) and said calculator (23) comprises an image analysis device configured so as to identify one or more targets in images provided by each camera (7).

11. Drone (10) according to any one of claims 1 to 10, **characterised in that** said structure (21) forms a fixed landing gear (20).

12. Drone (10) according to any one of claims 1 to 11, **characterised in that** said distributor (28) is fixed with respect to said structure (21) and said rotary engine (29) permits a rotation of said base (27) with respect to said distributor (28) and to said structure (21), so that during said rotation said opening (25) is located underneath a compartment (26) and enables a marking element contained in said compartment (26) to be released so as to mark the location of a detected target.

13. Drone (10) according to any one of claims 1 to 12, **characterised in that** a marking element is a coloured powder.

14. Drone (10) according to any one of claims 1 to 13, **characterised in that** said drone (10) comprises a tracking device and a communication device so as to transmit the coordinates of each detected target provided by said tracking device.

15. Drone (10) according to any one of claims 1 to 14, **characterised in that** said drone (10) comprises positioning devices in its environment so as to evolve in an autonomous manner in a segregated environment.
